# EUROPÄISCHE PATENTSCHRIFT

(11) **EP 1 194 910 B1**
(45) Veröffentlichungstag und Bekanntmachung des Hinweises auf die Patenterteilung: **02.05.2003**
(21) Anmeldenummer: 00945799.5
(22) Anmeldetag: 21.06.2000
(51) Int. Cl.: G08G 1/09

(54) **STRASSENVERKEHRSLEITSYSTEM FÜR GEFAHRENSTRECKEN, INSBESONDERE TUNNELS, SOWIE LICHTSIGNALMITTEL**
ROAD TRAFFIC ROUTING SYSTEM FOR DANGEROUS ROUTES, ESPECIALLY TUNNELS, AS WELL AS LIGHT SIGNALS
SYSTEME DE GUIDAGE DE TRAFIC ROUTIER POUR DES TRON ONS DANGEREUX, EN PARTICULIER DES TUNNELS, AINSI QUE MOYENS DE SIGNALISATION LUMINEUX

(30) Priorität: 28.06.1999 DE 19929645
(43) Veröffentlichungstag der Anmeldung: 10.04.2002
(73) Patentinhaber: Gerhaher, Christiane, 94405 Landau/Isar (DE); Gerhaher, Max, Dipl.-Ing., D-94405 Landau/Isar (DE)
(72) Erfinder: GERHAHER, Max, D-94405 Landau/Isar (DE)
(74) Vertreter: Barske, Heiko, Dr. rer. nat.
(86) Internationale Anmeldenummer: EP0005751
(87) Internationale Veröffentlichungsnummer: WO01001368

(56) Entgegenhaltungen:
- EP-A- 0 860 804
- DE-A- 19 631 827

## Beschreibung

Die Erfindung betrifft ein Straßenverkehrsleitsystem für Gefahrenstrecken, insbesondere Tunnels, gemäß dem Oberbegriff des Hauptanspruchs. Die Erfindung betrifft weiter Lichtsignalmittel für ein solches Straßenverkehrsleitsystem. Ein solches system ist aus der EP-A-860 804 bekannt.

In Straßentunnels kommt es wieder zu folgenschweren Unfällen, die beispielsweise dadurch bedingt sind, dass ein Fahrzeug infolge eines Auffahrunfalls in Brand gerät, weitere Fahrzeuge auffahren und/oder keine Fluchtwege zur Verfügung stehen.

Aus der DE 42 44 393 C1, von der im Oberbegriff des Hauptanspruchs ausgegangen wird, ist ein Straßenverkehrsleitsystem bekannt, bei dem längs einer Straße Lichtsignalmittel und im wesentlichen quer zur Fahrbahn wirkende Sensoreinrichtungen vorgesehen sind. Die Sensoreinrichtungen und die Lichtsignalmittel sind auf einen Verkehrsprozessor geschaltet, der die Lichtsignalmittel abhängig von der Verkehrssituation zur Abgabe von Warnsignalen ansteuert. Dabei können auch Wechselverkehrszeichen oder andere Hinweiszeichen angesteuert werden. Als ein typisches Einsatzbeispiel ist angegeben, dass beispielsweise verschiedene Verkehrsteilnehmer mit sehr unterschiedlichen Fahrgeschwindigkeiten fahren. Dies wird vom Verkehrsprozessor erfasst und die Lichtsignalmittel werden derart angesteuert, dass sie mit in Fahrtrichtung mit Richtgeschwindigkeit entlang der Fahrbahn laufendem Lichtimpulsen betrieben werden, um dadurch die Verkehrsteilnehmer derart zu beeinflussen, dass mit Richtgeschwindigkeit gefahren wird. Wird zu schnell gefahren, so werden die Lichtsignalmittel derart angesteuert , dass Blinkmodes einzelner Signalleuchten vor dem Fahrzeug jeweils sichtbar mit gleicher Laufgeschwindigkeit betrieben werden, bis der Verkehrsteilnehmer seine überhöhte Fahrgeschwindigkeit auf ein zulässiges Maß reduziert hat. Für die vorstehend geschilderte Problematik in Tunnels lässt sich der genannten Druckschrift keine relevante Lehre entnehmen.

Die DE 42 44 169 A1 beschreibt ein ähnliches Straßenverkehrsleitsystem wie das vorgenannte, bei dem die Lichtsignalmittel Signalleuchten mit einer Abstrahlcharakteristik des Lichtstroms derart aufweisen, dass der Hauptstrahl jeweils in Richtung des auf das betreffende Leuchtelement zu fahrenden Verkehrs ausgerichtet ist. Die Leuchtelemente können durch ein-oder verschiedenfarbig betreibbare LED-Arrays gebildet sein.

Aus der DE 42 10 170 C1 ist ein Straßenverkehrsleitsystem bekannt, bei dem die Steuereinrichtung derart ausgebildet ist, dass Lichtsignalmittel auf Warnung geschaltet werden, wenn die von den Sensoreinrichtungen erfasste Geschwindigkeit von n aufeinanderfolgenden Fahrzeugen einen unteren Grenzwert unterschreitet. Dabei können sowohl der Grenzwert als auch die Anzahl der aufeinanderfolgenden Fahrzeuge, deren Geschwindigkeit den Grenzwert unterschreiten muss, eingestellt werden.

Der Erfindung liegt die Aufgabe zugrunde, ein Straßenverkehrsleitsystem für Gefahrenstrecken, insbesondere Tunnels, zu schaffen, mit dem schwerwiegende Folgen von Unfällen in der Gefahrenstrecke weitgehend vermeidbar sind.

Eine Lösung dieser Aufgabe wird mit dem Straßenverkehrsleitsystem gemäß dem Anspruch 1 geschaffen.

Erfindungsgemäß wird bei Feststellen eines Problemfahrzeugs zunächst unmittelbar verhindert, dass weitere Fahrzeuge hinter dem Problemfahrzeug in die Gefahrenstrecke, insbesondere einen Tunnel, einfahren. Dann wird den hinter dem Problemfahrzeug befindlichen Fahrzeugen signalisiert, zu wenden und aus dem Tunnel auszufahren. Es versteht sich, dass dafür eine bestimmte Mindestbreite der Fahrbahn erforderlich ist. Wenn dies der Fall ist, leert sich die Gefahrenstrecke rasch und in geordnete Weise. Fahrzeuge, die zu groß sind, um zu wenden, können stehen bleiben. Ihre Insassen verlassen die Gefahrenstrecke z B. indem sie in Fahrzeugen mitfahren, die gewendet haben.

Mit den Merkmalen des Anspruchs 2 wird erreicht, dass die Fahrzeuge, beginnend mit dem dem Problemfahrzeug nächsten Fahrzeug, der Reihe nach wenden und die Gefahrenstrecke verlassen, wodurch ein geordnetes, rasches Leeren der Gefahrenstrecke in der Reihenfolge der jeweiligen Gefährdung durch das Problemfahrzeug erreicht wird.

Mit den Merkmalen des Anspruchs 3 wird erreicht, dass sich die Gefahrenstrecke vor dem Problemfahrzeug rasch leert, sodass das Problemfahrzeug dann von beiden Seiten hier erreicht werden kann.

Vorteilhaft ist, wenn das Straßenverkehrsleitsystem gemäß dem Anspruch 4 an Gefahrenstrecken eingesetzt wird, die in entgegengesetzte Richtungen befahrbare Richtungsfahrbahnen aufweisen. Damit ist im allgemeinen eine Fahrbahnbreite vorhanden, die ein problemloses Wenden zulässt.

Mit dem Merkmal der Ansprüche 5 und 6 wird ein rasches Leeren der Gefahrenstrecke unterstützt.

Der Anspruch 7 kennzeichnet einen zweckmäßigen Abstand der Lichtsignale.

Die Ansprüche 8 bis 11 sind auf vorteilhafte Ausbildungen der Sensoreinrichtung gerichtet.

Mit den Merkmalen des Anspruchs 12 wird erreicht, dass das erfindungsgemäße System auch in solchen Gefahrenstrecken, beispielsweise Tunnels, einsetzbar ist, die mit völlig voneinander getrennten mehrspurigen Fahrbahnen ausgerüstet sind.

Der Anspruch 13 kennzeichnet eine vorteilhafte Ausbildung der Lichtsignalmittel, wie sie in dem erfindungsgemäßen Straßenverkehrsleitsystem verwendet werden.

Das erfindungsgemäße Straßenverkehrsleitsystem ist nicht nur für Tunnels, sondern auch für andere Gefahrenstrecken, wie Brücken, verkehrlich problematische Zonen usw. geeignet.

Die Erfindung wir im folgenden anhand schematischer Zeichnungen beispielsweise und mit weiteren Einzelheiten erläutert.
Es stellen dar:
- Fig. 1: eine Gefahrenstrecke mit einem Leitsystem,
- Fig. 2: eine Aufsicht auf eine zu einer Baueinheit zusammengefassten Sensoreinrichtung und Lichtsignalmittel,
- Fig. 3: eine Stimansicht der Baueinheit gemäß Fig. 2 und
- Fig. 4: eine Gefahrenstrecke mit zwei voneinander getrennten. mehrspurigen Fahrbahnen.

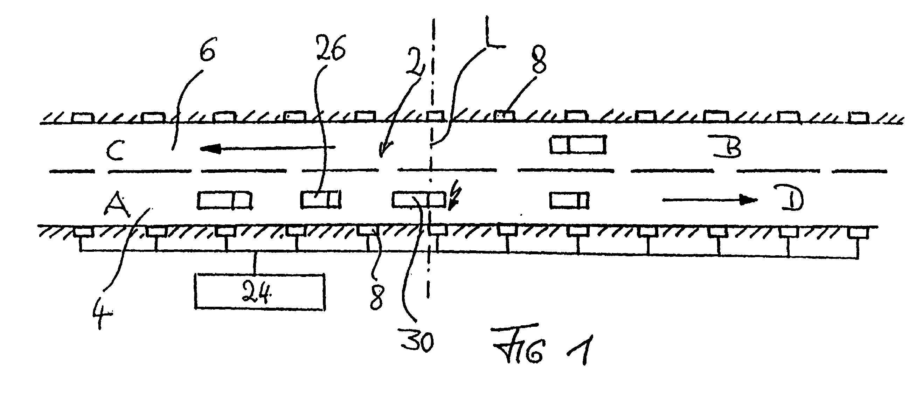

Gemäß Fig. 1 weist eine innerhalb eines nicht dargestellten Tunnels verlaufende Fahrbahn 2 zwei Richtungsfahrbahnen 4 und 6 auf, von denen die Richtungsfahrbahn 4 gemäß Fig. 1 nach rechts und die Richtungsfahrbahn 6 nach links befahren werden soll. Längs der Fahrbahn 2 sind an beiden Seiten und in gleichmäßigen Abständen Einheiten 8 angeordnet, die jeweils Sensoreinrichtungen und Lichtsignalmittel enthalten.

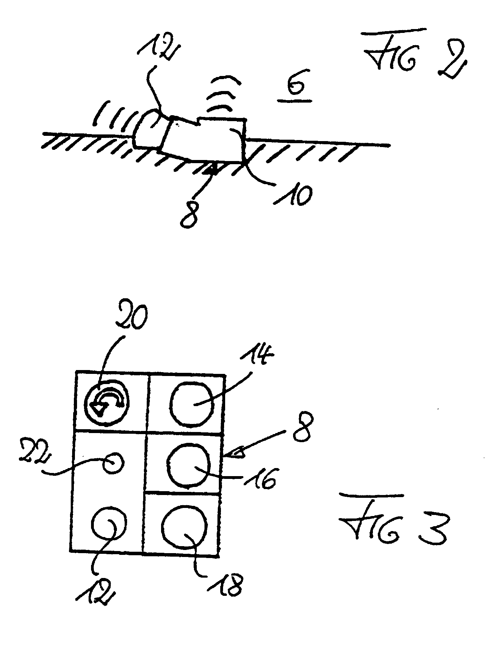

Fig. 2 zeigt eine Aufsicht auf eine Einheit 8 und deutet einen quer zur Fahrbahn 4 sensierenden Ultraschallsensor 10 und einen Radarsensor 12 an.

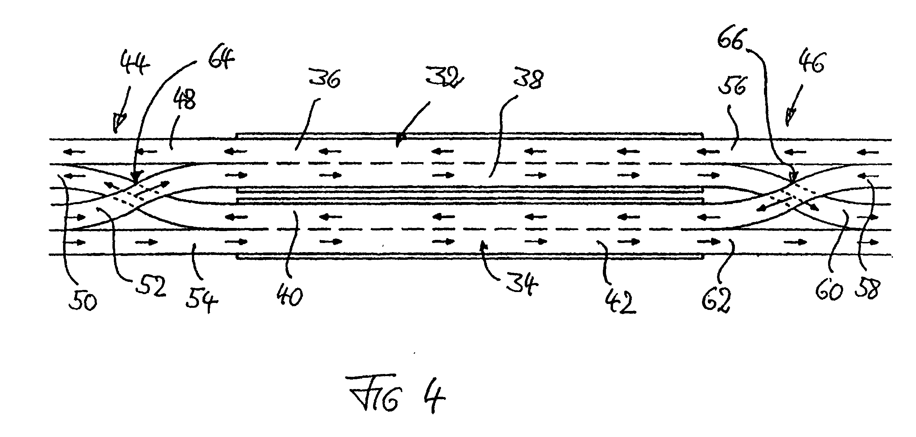

Fig. 3 zeigt eine Ansicht der Einheit 8 gemäß Fig. 2 von links, so wie sich die Einheit 8 jeweils einem in Richtung der jeweiligen Richtungsfahrbahn fahrenden Fahrer bietet. Die Einheit 8 enthält in Art einer Verkehrsampel 3 übereinander angeordnete Leuchten, eine oberste Leuchte 14, die rot aufleuchten kann, eine mittlere Leuchte 16, die gelb aufleuchten kann und eine unterste Leuchte 18, die grün aufleuchten kann. Eine weitere Leuchte 20 ist als Wendeleuchte beispielsweise mit einem grünen Wendepfeil in Art eines umgekehrten U oder Halbkreises gestaltet. Mit 22 ist eine Infrarotkamera bezeichnet, mit der in an sich bekannter Weise Verkehrsteilnehmer fotografiert werden können. 12 bezeichnet den in Fig. 2 in Aufsicht dargestellten Radarsensor.

Wie aus Fig. 1 ersichtlich, sind die Einheiten 8 mit einem Steuergerät 24 verbunden, das beispielsweise in einer Überwachungszentrale des Tunnels untergebracht ist und in an sich bekannter Weise einen Mikrorechner mit zugehörigen Speichereinrichtungen enthält. Der Einfachheit halber sind in Fig. 1 nur die Verbindungsleitungen zwischen den in der Figur unteren Einheiten 8 und dem Steuergerät 24 gezeichnet.

Mit 26 sind Fahrzeuge bezeichnet; 30 stellt ein im folgenden zu definierendes Problemfahrzeug dar.

Die in der beschriebenen Anordnung verwendeten Baugruppen sind in ihrem Aufbau und in ihrer Funktion an sich bekannt. Ebenso ist der Aufbau von Verbindungsschaltungen zwischen dem Steuergerät 24 und den Einheiten 8 bekannt, mit denen die Einheiten 8 einzeln angesteuert werden können. Es versteht sich, dass dafür bevorzugt Bus-Systeme verwendet werden.

Im Folgenden wird daher nur das Zusammenwirken der Baugruppen anhand deren grundsätzlicher Funktionsmerkmale erläutert:

Die einzelnen Einheiten 8 sind vorteilhafterweise längs der Fahrbahn 2 in einem Abstand angeordnet, der dem bezüglich der in dem Tunnel empfohlenen Richtgeschwindigkeit oder zulässigen Höchstgeschwindigkeit entsprechenden Sicherheitsabstand entspricht. Dieser Sicherheitsabstand ist normalerweise in Metern gemessen halb so groß wie die Geschwindigkeit in Kilometern gemessen. Die Anordnung der Einheiten 8 in diesem Sicherheitsabstand hat den Vorteil, dass der Sicherheitsabstand den Fahrern der durch den Tunnel fahrenden Fahrzeuge unmittelbar signalisiert wird, indem beispielsweise im Normalzustand alle grünen Leuchten 18 aktiviert sind. es versteht sich, dass der Abstand zwischen den Einheiten auch größer oder kleiner als der Sicherheitsabstand sein kann. Wenn er kleiner ist, beträgt er vorteilhafterweise einen ganzzahligen Bruchteil des Sicherheitsabstandes, so dass beispielsweise beim Einfahren in den Tunnel ausgeschildert sein kann, dass der empfohlene Sicherheitsabstand dem Abstand zwischen 3 oder 4 Leuchten bzw. Einheiten entspricht.

Mit Hilfe der in den einzelnen Einheiten 8 enthaltenen Radarsensoren 12 wird die Geschwindigkeit der auf die jeweiligen Einheiten zufahrenden Fahrzeuge 26 ermittelt Wird nun beispielsweise festgestellt, dass ein Fahrzeug liegengeblieben ist, beispielsweise das Fahrzeug 30 in Fig. 1, was von der vor diesem Fahrzeug befindlichen Einheit festgestellt wird, so teilt das Steuergerät 24 die Fahrbahn in vier Sektoren A, B, C und D, begrenzt jeweils durch eine quer zur Fahrbahn 2 durch das nahe dem Problemfahrzeug verlaufende, strichpunktiert eingezeichnete Linie L und die gestrichelt eingezeichnete Fahrbahnmittellinie. Der Sektor A ist der Sektor der Richtungsfahrbahn 4 hinter dem Problemfahrzeug 30. Der Sektor B ist der Sektor der Gegenrichtungsfahrbahn 6, bezogen auf deren Richtung vor dem Problemfahrzeug 30. Die Sektoren C und D sind den Sektoren A und B auf der jeweils anderen Richtungsfahrbahn benachbarte Sektoren.

Bei Erkennen des Problemfahrzeugs 30 schaltet das Steuergerät 24 im Sektor A alle optischen Signalmittel auf Rot, d.h. schaltet die grünen Leuchten 18 aus und die roten Leuchten 14 an. Auf diese Weise wird erreicht, dass alle hinter dem Problemfahrzeug 30 befindlichen Fahrzeuge augenblicklich gewarnt werden. Das Springen der Leuchten auf Rot erregt die Aufmerksamkeit der Fahrer, so dass die Gefahr eines Auffahrunfalls minimiert ist. Zusätzlich wird erreicht, dass keine weiteren Fahrzeuge in den Tunnel einfahren. Dadurch, dass auf der ganzen Strecke gleichzeitig auf Rot geschaltet wird, bleiben alle Fahrzeuge etwa gleichzeitig stehen und schließen nicht zum vorderen Fahrzeug auf, wie dies der Fall ist, wenn nur am Kopf der Fahrzeugkolonne ein einziges Signal auf Rot geschaltet wird. Dadurch bleibt der vor dem Abbremsen bestehende Abstand zwischen den Fahrzeugen auch im Stillstand erhalten, so dass sich weniger Fahrzeuge und Personen in der Gefahrenzone befinden, die Gefahr des Brandübergreifens vermindert wird und mehr Platz zum Wenden der Fahrzeuge zur Verfügung steht.

Auch die optischen Signalmittel im Sektor B werden auf Rot geschaltet, so dass sich keine weiteren Fahrzeuge auf der Gegenfahrbahn dem Problernfahrzeug 30 nähern und auch dort die vorstehend beschriebenen Vorteile erzielt werden. Die Signalmittel der Sektoren C und D bleiben auf grün oder werden ggfs. auf Grün geschaltet, um dortigen Fahrzeugen zu signalisieren, weiterzufahren und den Tunnel zu verlassen.

Wenn beispielsweise über Rauchmelder, Temperatursensoren oder sonstige Sensoren, die zusätzlich in den Einheiten 8 enthalten sein oder an der Tunneldecke angebracht sein können, festgestellt wird, dass das Problemfahrzeug 30 brennt, dass giftige Gase entweichen usw., dann werden in den Sektoren A und B die Umkehrleuchten 20 aktiviert, wobei dieses vorzugsweise ausgehend von dem Problemfahrzeug 30 der Reihe nach erfolgt. Auf diese Weise wird zunächst den dem Problemfahrzeug 30 nächsten Fahrzeugen signalisiert, umzukehren und den Tunnel zu verlassen. Anschließend wird dies den weiter nachfolgenden Fahrzeugen signalisiert, so dass der Tunnel rasch geräumt wird und für Rettungsfahrzeuge Zufahrtmöglichkeit besteht.

Es versteht sich, dass die Lampen im Sektor B gar nicht auf Rot oder nach ihrer Schaltung auf Rot auf Grün geschaltet werden, wenn erkannt wird, dass von dem Problemfahrzeug 30 keine Gefahr für die auf der Gegenfahrbahn fahrenden Fahrzeuge ausgeht. Falls im Sektor A und D zweispurige Fahrbahnen für die gleiche Richtung vorhanden sind, kann in Sektor A auf gelb geschaltet werden, damit das Problemfahrzeug gefahrlos überholt werden kann.

Die Schaltungen der optischen Signalmittel können vom Steuergerät 24 aus automatisch erfolgen oder sie können mit zusätzlicher Unterstützung von in einer Steuerwarte des Tunnels befindlichen Personals erfolgen.

Wenn die Radarsensoren 12 erkennen, dass ein Fahrzeug ungewöhnlich langsam fährt, können die geschilderten Schaltungen der optischen Signalmittel in ähnlicher Weise erfolgen, wobei sich die strichpunktierte Sektorengrenze bzw. Linie L mit dem sehr langsam fahrenden Problemfahrzeug mitbewegt. Wenn zusätzlich erkannt wird, dass das Problemfahrzeug brennt oder eine sonstige zusätzliche Gefahr von ihm ausgeht, können die Wendeleuchten, wie vorstehend erläutert, in Funktion gesetzt werden.

Somit ist es möglich, das System, solange ein Problemfahrzeug noch fahrfähig ist, mit einer dynamischen bzw. mit dem Problemfahrzeug mitwandernden Sektorengrenze bzw. Linie L zu betreiben, wobei die Schaltung der optischen bzw. Lichtsignalmittel 8 im mit dem Problemfahrzeug mitwandemden Sektor B auf Wenden von der vom Problemfahrzeug ausgehenden Gefahr abhängt Bei geringer Gefahr kann das Problemfahrzeug ständig langsam weiterfahren, wobei es die bei roten Lichtsignalmitteln im Sektor B befindlichen und dort stehenden Fahrzeuge passiert, die sich nach Passieren des Problemfahrzeugs im Sektor C befinden und bei Grün ausfahren. Alternativ kann bei großer Gefahr beispielsweise das Problemfahrzeug selbst durch auf Rot geschaltete Signalmittel angehalten werden, woraufhin die Signalmittel im Sektor B mit zunehmendem Abstand vom Problemfahrzeug der Reihe nach auf Umkehren schalten und das Problemfahrzeug durch Schalten der vor ihm befindlichen Signalmittel auf Grün hinter den umgekehrten Fahrzeugen ausfährt.

Es versteht sich, dass zur Erfassung der Geschwindigkeit der Fahrzeuge unterschiedlichste geeignete Sensoren eingesetzt werden können, beispielsweise in der Fahrbahn verlegte Schleifen, deren Abstände bekannt sind. Die Geschwindigkeit eines Fahrzeuges kann dann aus dem zeitlichen Abstand des Durchfahrens zweier Schleifen errechnet werden.

Die gelbe Leuchte 16 kann jeweils bei einem Umschalten von Grün auf Rot kurzzeitig aktiviert werden. Die Wendeleuchte 20 kann, wenn ein Wendegebot und Gebot zum Verlassen des Tunnels signalisiert wird, auf Blinkbetrieb geschaltet werden.

Mit Hilfe der Radarsensoren 12 ist es nicht nur möglich, die Geschwindigkeit der Fahrzeuge zu bestimmen, sondern auch deren Abstand von dem jeweiligen Radarsensor 12. Wird nun beispielsweise mit Hilfe des Ultraschallsensors 10 (Fig. 2) die Hinterkante bzw. das Ende der Vorbeifahrt eines Fahrzeugs an dem Ultraschallsensor 10 festgestellt und gleichzeitig mit dem zugehörigen Radarsensor 12 die Entfernung zum nachfolgenden Fahrzeug ermittelt, so ist der Abstand des nachfolgenden Fahrzeugs zum vorausfahrenden Fahrzeug bekannt. Unterschreitet dieser Abstand den jeweils vorgeschriebenen Sicherheitsabstand, so kann die Infrarotkamera 22 aktiviert werden und ein Bild des "Verkehrssünders" aufgenommen werden. Alternativ oder zusätzlich kann beispielsweise eine weitere Lampe dem jeweiligen Fahrzeug, das mit zu kurzem Abstand fährt, signalisieren "Abstand einhalten". Auf diese Weise lässt sich die Gefahr von Auffährunfällen weiter vermindern.

Es versteht sich, dass auch zur Abstandssensierung unterschiedlichste Sensoren verwendet werden können.

Die einzelnen Funktionsumfänge und Elemente des geschilderten Straßenverkehrsleitsystems, wie Rotlichter, Wendesignale, selbsttätige Abstandserfassung mit Warnung und/oder Photo, können einzeln oder in Kombination verwendet werden. Auch mit einer kontinuierlichen Abstandssensierung beispielsweise, die gegebenenfalls ein Unterschreiten des Abstandes anzeigt und auf die am Eingang des Tunnels gezielt hingewiesen wird, kann ein erheblicher Sicherheitsgewinn erzielt werden.

Das geschilderte Straßenverkehrsleitsystem lässt sich in vorhandene Tunnels kostengünstig und in einfacher Weise einbauen, so dass deren Sicherheit innerhalb kurzer Zeit erheblich verbessert werden kann.

Bei Tunnels, deren Röhre bzw. Fahrbahn insgesamt nur in einer Richtung durchfahren wird, ist es im allgemeinen nicht ohne weiteres möglich, im Falle eines brennenden Problemfahrzeugs 30 die beispielsweise zwei Richtungsstreifen hinter dem Fahrzeug freizuräumen. Bezugnehmend auf die Fig. 1 wäre die Situation dann so, dass im Sektor C die Fahrzeuge gleichsinnig mit denen des Sektors A fahren würden. Bei brennendem Problemfahrzeug 30 könnten diese Fahrzeuge im allgemeinen nicht an dem Problemfahrzeug 30 vorbeifahren. so dass die Sektoren A und C nicht durch Umkehren von Fahrzeugen freigeräumt werden können. Somit haben hinsichtlich der Unfällsicherheit Tunnels mit Röhren, die in beiden Richtungen durchfahren werden, durchaus gewisse Vorteile. Zusammenstöße wegen Frontalaufprallunfällen wurden in Tunnels nur selten beobachtet. Abhilfe für das geschilderte Problem kann dadurch geschaffen werden, dass zwei Tunnelröhren mit beispielsweise jeweils zwei gleichsinnigen Richtungsfahrbahnen unmittelbar nebeneinander verlaufen und zahlreiche seitliche Durchfahrten bzw. quer verlaufende Verbindungstunnels haben. Wiederum auf die Fig. 1 bezogen wäre die gestrichelte Längsmittellinie zwischen den Richtungsfahrbahnen 4 und 6 dann eine Tunnelwand mit Verbindungstunneln. Ein solcher Tunnel könnte durch Umkehren der Fahrzeuge freigeräumt werden und wird vorteilhafterweise mit Sensoren und Signalmitteln ähnlich denen der Fig. 1 ausgerüstet, wobei vorteilhafterweise in den Durchfahrten zusätzliche ampelartige Leuchten angeordnet sind.

Fig. 4 zeigt eine Gefahrenstrecke, beipielsweise einen Tunnel, mit zwei beispielsweise durch eine Trennwand getrennte Fahrbahnen 32 und 34 mit jeweils zwei Richtungsfahrbahnen bzw. Fahrstreifen 36 und 38 bzw. 40 und 42.

Anschlussbereiche 44 und 46 weisen ebenfalls vier Fahrstreifen 48, 50, 52, 54 bzw. 56, 58, 60 und 62 auf. Herkömmlicherweise sind die beschriebenen Fahrstreifen derart befahrbar, dass jeweils zwei voneinander getrennte Fahrbahnen mit je zwei Fahrstreifen gebildet sind, die in gleicher Richtung befahrbar sind.

Erfindungsgemäß sind Leiteinrichtungen 64 sowie 66 geschaffen, die die Fahrstreifen 52 und 38 bzw. 50 und 40 sowie 38 und 60 bzw. 40 und 58 verbinden, indem die Verbindungsstellen beispielsweise übereinander geführt werden. Wie aus der Fig. 4, in der die Pfeile die Fahrtrichtungen darstellen, unmittelbar ersichtlich, sind auf diese Weise die außerhalb des Tunnels in zweispurig in gleicher Richtung aber insgesamt entgegengesetzt befahrbaren Fahrbahnen über die Fahrbahnen 32 und 34 innerhalb des Tunnels derart miteinander verbunden, dass die Fahrstreifen 36 und 38 bzw. 40 und 42 der Fahrbahnen 32 und 34 jeweils gegensinnig befahrbar sind, sodass das anhand der Fig. 1 geschilderte Verkehrsleitsystem unmittelbar an den Fahrbahnen 32 und 34 einsetzbar ist bzw. herkömmlicherweise getrennte und jeweils nur in einer Richtung befahrbare, mehrspurige Tunnel als in beide Richtungen befahrbare Tunnel im Sinne der Fig. 1 betrieben werden können, wodurch ein hohes Maß an Sicherheit erreicht wird.

Die vorgenannten, außerhalb des Tunnels befindlichen Leiteinrichtungen sind erheblich billiger als zahlreiche, innerhalb des Tunnels erforderliche Querverbindungen bzw. Verbindungstunnels zwischen den Fahrbahnen.

Es versteht sich, dass die Leiteinrichtungen auch auf andere, geeignete Art, ausgeführt sein können und dass auch Fahrbahnen mit mehr als drei Spuren bzw. Streifen derart miteinander verbunden werden können, dass ein gegensinniges Befahren erreicht wird.

Mit der Ausbildung gem. Fig. 4 lässt sich die Sicherheit von Tunneln mit getrennten, mehrspurigen Richtungsfahrbahnen verbessern.

### Bezugszeichenliste

- 2: Fahrbahn
- 4: Richtungsfahrbahn
- 6: Richtungsfahrbahn
- 8: Einheit
- 10: Ultraschallsensor
- 12: Radarsensor
- 14: rote Leuchte
- 16: gelbe Leuchte
- 18: grüne Leuchte
- 20: Wendeleuchte
- 22: Infrarotkamera
- 24: Steuergerät
- 26: Fahrzeuge
- 30: Problemfahrzeug
- 32: Fahrbahn
- 34: Fahrbahn
- 26: Fahrstreifen
- 28: Fahrstreifen
- 40: Fahrstreifen
- 42: Fahrstreifen
- 44: Anschlussbereich
- 46: Anschlussbereich
- 48: Fahrstreifen
- 50: Fahrstreifen
- 52: Fahrstreifen
- 54: Fahrstreifen
- 56: Fahrstreifen
- 58: Fahrstreifen
- 60: Fahrstreifen
- 62: Fahrstreifen
- 64: Leiteinrichtung
- 66: Leiteinrichtung

## Patentansprüche

1. Straßenverkehrsleitsystem für Gefahrenstrecken. insbesondere Tunnels. enthaltend
längs einer Fahrbahn in etwa gleichen Abständen angeordnete Lichtsignalmittel (8),
längs der Fahrbahn in etwa gleichen Abständen angeordnete Sensoreinrichtungen (8) zur Erfassung eines Zustands von Fahrzeugen und
eine mit dem Lichtsignalmitteln und den Sensoreinrichtungen verbundene Steuereinrichtung (24), welche die Lichtsignalmittel abhängig von den erfassten Zuständen von Fahrzeugen steuert,
**dadurch gekennzeichnet, dass**
die Steuereinrichtung (24) bei einem von der Sensoreinrichtung erkannten Problemfahrzeug (30) die in Fahrtrichtung des Problemfahrzeugs hinter diesem befindlichen Lichtsignalmittel im wesentlichen gleichzeitig in einen Zustand schaltet, in dem die Sperrung einer Weiterfahrt signalisiert wird, und die Lichtsignalmittel anschließend in einen Zustand schaltet, der ein Umkehren signalisiert.

2. Straßenverkehrsleitsystem nach Anspruch 1,
**dadurch gekennzeichnet, dass** die Steuereinrichtung (24) die Lichtsignalmittel mit zunehmendem Abstand vom Problemfahrzeug hintereinander in den ein Umkehren signalisierenden Zustand schaltet.

3. Straßenverkehrsleitsystem nach Anspruch 1 oder 2,
**dadurch gekennzeichnet, dass** die Steuereinrichtung (24) die Lichtsignalmittel (8) in einem Bereich vor dem Problemfahrzeug (30) längs dessen Richtungsfahrbahn (4) in einen Zustand schaltet, der eine Weiterfahrt signalisiert.

4. Straßenverkehrsleitsystem nach einem der Ansprüche 1 bis 3,
**dadurch gekennzeichnet, dass** die Fahrbahn (2) zwei in entgegengesetzter Richtung befahrbare Richtungsfahrbahnen (4,6) aufweist, die Lichtsignalmittel und die Sensoreinrichtungen zu beiden Seiten der Fahrbahn angeordnet sind, und die Steuereinrichtung (24) die Lichtsignalmittel bei Erkennen eines Problemfahrzeugs längs der Gegenrichtungsfahrbahn (6) des Problemfahrzeugs (30) vor dem Problemfahrzeug in einen Zustand schaltet, in dem die Sperrung der Weiterfahrt signalisiert wird.

5. Straßenverkehrsleitsystem nach Anspruch 4,
**dadurch gekennzeichnet. dass** die Steuereinrichtung (24) die Lichtsignalmittel (8) in einem Bereich hinter dem Problemfahrzeug längs der Gegenrichtungsfahrbahn (6) in einen Zustand schaltet, in dem eine Weiterfahrt signalisiert wird.

6. Straßenverkehrsleitsystem nach Anspruch 4 oder 5,
**dadurch gekennzeichnet, dass** die Steuereinrichtung (24) die Lichtsignalmittel (8) in einem Bereich vor dem Problemfahrzeug längs der Gegenrichtungsfahrbahn (6) in einen Zustand schaltet, in dem ein Umkehren signalisiert wird.

7. Straßenverkehrsleitsystem nach einem der Ansprüche 1 bis 6,
**dadurch gekennzeichnet, dass** die Lichtsignalmittel (8) in Abständen von etwa (1/n x a/2) (Meter) angeordnet sind, wobei a eine empfohlene Richtgeschwindigkeit in km/h und n eine ganze Zahl ist.

8. Straßenverkehrsleitsystem nach einem der Ansprüche 1 bis 7,
**dadurch gekennzeichnet, dass** die Sensoreinrichtungen (10,12) die Geschwindigkeit der Fahrzeuge erfassen.

9. Straßenverkehrsleitsystem nach Anspruch 8,
**dadurch gekennzeichnet, dass** die Sensoreinrichtungen (10, 12) den Abstand zwischen zwei Fahrzeugen erfassen.

10. Straßenverkehrsteitsystem nach Anspruch 8 oder 9,
**dadurch gekennzeichnet, dass** die Sensoreinrichtung mit Kameras (22) versehen sind, die ein einen vorbestimmten Mindestabstand zum vorausfahrenden Fahrzeug unterschreitendes Fahrzeug aufnehmen.

11. Straßenverkehrsleitsystem nach einem der Ansprüche 1 bis 10,
**dadurch gekennzeichnet, dass** die Sensoreinrichtungen und die Lichtsignalmittel zu Einheiten (8) zusammengefasst sind.

12. Straßenverkehrsleitsystem nach einem der Ansprüche 1 bis 11,
**dadurch gekennzeichnet, dass** die Gefahrenstrecke und Anschlussbereiche (44, 46) zwei voneinander getrennte Fahrbahnen (32, 34) mit jeweils wenigstens zwei Fahrstreifen 36, 38; 40, 42; 48, 50; 52, 54; 56, 58; 60, 62) aufweisen und dass beidseitig der Gefahrenstrecke Leiteinrichtungen (64, 66) vorhanden sind, die einen Fahrstreifen jeder Fahrbahn der Gefahrenstrecke mit einem Fahrstreifen der jeweils anderen Fahrbahn der Anschlussbereiche verbinden, sodass jede Fahrbahn (32, 34) der Gefahrenstrecke in entgegengesetzte Richtungen befahrbare Fahrstreifen aufweist, während die Fahrstreifen jeder Fahrbahn der Anschlussbereiche in gleicher Richtung befahrbar sind.

13. Lichtsignalmittel zur Verwendung in einem Straßenverkehrsleitsystem, nach einem der Ansprüche 1 bis 11, **gekennzeichnet durch** eine Wendeleuchte (20), die eine Leuchtfläche mit einem Pfeil in Art eines umgekehrten U aufweist.

## Claims

1. A road traffic management system for danger sections, in particular tunnels, including
light signal means (8) arranged along a carriageway at substantially equal spacings,
sensor devices (8) arranged along the carriageway at substantially equal spacings for detecting a condition of vehicles, and
a control device (24) which is connected to the light signal means and the sensor devices and which controls the light signal means in dependence on the detected conditions of vehicles,
**characterised in that** in relation to a problem vehicle (30) recognised by the sensor device the control device (24) substantially simultaneously switches the light signal means disposed behind the problem vehicle in the direction of travel thereof into a condition in which the blocking of travel ahead is signalled, and then switches the light signal means into a condition which signals turning round.

2. A road traffic management system according to claim 1 **characterised in that** the control device (4) switches the light signal means at an increasing distance from the problem vehicle successively into the condition signalling turning round.

3. A road traffic management system according to claim 1 or claim 2 **characterised in that** the control device (24) switches the light signal means (8) in a region in front of the problem vehicle (30) along the directional carriageway (4) thereof into a condition which signals travel ahead.

4. A road traffic management system according to one of claims 1 to 3 **characterised in that** the carriageway (2) has two directional carriageways (4, 6) along which vehicles can travel in opposite directions, the light signal means and the sensor devices are arranged at both sides of the carriageway, and the control device (24) switches the light signal means when a problem vehicle is recognised along the carriageway (6) in the opposite direction to the problem vehicle (30) in front of the problem vehicle into a condition in which the blocking of travel ahead is signalled.

5. A road traffic management system according to claim 4 **characterised in that** the control device (24) switches the light signal means (8) in a region behind the problem vehicle along the opposite carriageway (6) thereto into a condition in which travel ahead is signalled.

6. A road traffic management system according to claim 4 or claim 5 **characterised in that** the control device (24) switches the light signal means (8) in a region in front of the problem vehicle along the opposite carriageway (6) thereto into a condition in which turning round is signalled.

7. A road traffic management system according to one of claims 1 to 6 **characterised in that** the light signal means (8) are arranged at spacings of about (1/n x a/2) (metres), wherein a is a recommended directional speed in kph and n is an integer.

8. A road traffic management system according to one of claims 1 to 7 **characterised in that** the sensor devices (10, 12) detect the speed of the vehicles.

9. A road traffic management system according to claim 8 **characterised in that** the sensor devices (10, 12) detect the spacing between two vehicles.

10. A road traffic management system according to claim 8 or claim 9 **characterised in that** the sensor devices are provided with cameras (22) which record a vehicle which is at less than a predetermined minimum distance relative to the vehicle travelling ahead of it.

11. A road traffic management system according to one of claims 1 to 10 **characterised in that** the sensor devices and the light signal means are combined to form units (8).

12. A road traffic management system according to one of claims 1 to 11 **characterised in that** the danger section and junction regions (44, 46) have two mutually separate carriageways (32, 34) each with at least two respective lanes (36, 38; 40, 42; 48, 50; 52, 54; 56, 58; 60, 62) and that on both sides of the danger section are guide arrangements (64, 66) which connect a lane of each carriageway of the danger section with a lane of the respective other carriageway of the junction regions so that each carriageway (32, 34) of the danger section has lanes along which vehicles can travel in opposite directions while the lanes of each carriageway of the junction regions can be travelled in the same direction.

13. A light signal means for use in a road traffic management system according to one of claims 1 to 11 **characterised by** a turning light (20) which has a light surface with an arrow in the nature of an inverted U.

## Revendications

1. Système de contrôle de trafic routier pour des trajets dangereux, en particulier des tunnels, comportant :
des moyens de signalisation lumineuse (8) agencés le long d'une chaussée à des distances approximativement égales,
des capteurs (8) agencés le long d'une chaussée à des distances approximativement égales pour détecter un état de véhicules, et
un système de commande (24) relié aux moyens de signalisation lumineuse et aux capteurs, lequel commande les moyens de signalisation lumineuse en fonction des états de véhicules détectés,
**caractérisé en ce que** :
dans le cas d'un véhicule problématique (30) reconnu par le capteur, le système de commande (24) commute les moyens de signalisation lumineuse se trouvant derrière le véhicule problématique en direction de roulement de celui-ci, sensiblement en même temps dans un état qui signalise qu'une poursuite d'avancement est bloquée, et qui commute ensuite les moyens de signalisation lumineuse dans un état qui signalise un rebroussement.

2. Système de contrôle de trafic routier selon 1a revendication 1, **caractérisé en ce que** le système de commande (24) commute les moyens de signalisation lumineuse avec une distance croissante par rapport au véhicule problématique, les uns après les autres dans l'état signalisant un rebroussement.

3. Système de contrôle de trafic routier selon l'une ou l'autre des revendications 1 et 2, **caractérisé en ce que** le système de commande (24) commute les moyens de signalisation lumineuse (8), dans une zone précédant le véhicule problématique (30) le long de la chaussée (4) dans sa direction, dans un état qui signalise une poursuite de l'avancement.

4. Système de contrôle de trafic routier selon l'une des revendications 1 à 3, **caractérisé en ce que** la chaussée (2) présente deux chaussées (4, 6) praticables dans deux directions opposées, **en ce que** les moyens de signalisation lumineuse et les capteurs sont agencés des deux côtés de la chaussée, et **en ce que** lorsqu'un véhicule problématique est reconnu, le système de commande (24) commute les moyens de signalisation lumineuse, le long de la chaussée en direction inverse (6) du véhicule problématique (30) et devant celui-ci, dans un état qui signalise qu'une poursuite de l'avancement est bloquée.

5. Système de contrôle de trafic routier selon la revendication 4, **caractérisé en ce que** le système de commande (24) commute les moyens de signalisation lumineuse (8), dans une zone derrière le véhicule problématique le long de la chaussée en direction inverse (6), dans un état qui signalise une poursuite de l'avancement.

6. Système de contrôle de trafic routier selon l'une ou l'autre des revendications 4 et 5, **caractérisé en ce que** le système de commande (24) commute les moyens de signalisation lumineuse (8), dans une zone devant le véhicule problématique le long de la chaussée en direction inverse (6), dans un état qui signalise un rebroussement.

7. Système de contrôle de trafic routier selon l'une des revendications 1 à 6, **caractérisé en ce que** les moyens de signalisation lumineuse (8) sont agencés à des distances d'approximativement (1/n x a/2) (mètres), a étant une vitesse recommandée en km/h et n étant un nombre entier.

8. Système de contrôle de trafic routier selon l'une des revendications 1 à 7, **caractérisé en ce que** les capteurs (10, 12) détectent la vitesse des véhicules.

9. Système de contrôle de trafic routier selon la revendication 8, **caractérisé en ce que** les capteurs (10, 12) détectent la distance entre deux véhicules.

10. Système de contrôle de trafic routier selon l'une ou l'autre des revendications 8 et 9, **caractérisé en ce que** les capteurs sont équipés de caméras (22) qui photographient un véhicule qui passe au-dessous d'une distance minimum prédéterminée par rapport au véhicule qui le précède.

11. Système de contrôle de trafic routier selon l'une des revendications 1 à 10, **caractérisé en ce que** les capteurs et les moyens de signalisation lumineuse sont réunis en des unités (8).

12. Système de contrôle de trafic routier selon l'une des revendications 1 à 11, **caractérisé en ce que** le trajet dangereux et les zones de raccordement (44, 46) présentent deux chaussées (32, 34) séparées l'une de l'autre avec chacune au moins deux voies de circulation (36, 38 40, 42 ; 48, 50 ; 52, 54 ; 56, 58 ; 60, 62), et **en ce que** des deux côtés du trajet dangereux se trouvent des systèmes de contrôle (64, 66) qui relient une voie de chaque chaussée du trajet dangereux avec une voie de l'autre chaussée respective des zones de raccordement, de sorte que chaque chaussée (32, 34) du trajet dangereux présente des voies praticables en directions opposées tandis que les voies de chaque chaussée des zones de raccordement sont praticables dans la même direction.

13. Moyens de signalisation lumineuse destinés à être utilisés dans un système de contrôle de trafic routier selon l'une des revendications 1 à 11, **caractérisés par** un feu de demi-tour (29) qui présente une surface d'éclairage avec une flèche ressemblant à un U inversé.
